(19) Europäisches Patentamt
European Patent Office
Office européen des brevets

(11) Veröffentlichungsnummer: **0 182 226**
**B1**

(12) **EUROPÄISCHE PATENTSCHRIFT**

(45) Veröffentlichungstag der Patentschrift: **18.04.90**

(51) Int. Cl.5: **C 08 L 69/00,** C 08 L 27/18, C 08 K 5/00

(21) Anmeldenummer: **85114237.2**

(22) Anmeldetag: **08.11.85**

# (54) Verfahren zur Herstellung von Tetrafluorethylenpolymerisathaltigen, flammwidrigen Polycarbonatformmassen.

(30) Priorität: **20.11.84 DE 3442281**

(43) Veröffentlichungstag der Anmeldung:
**28.05.86 Patentblatt 86/22**

(45) Bekanntmachung des Hinweises auf die Patenterteilung:
**18.04.90 Patentblatt 90/16**

(84) Benannte Vertragsstaaten:
**DE FR GB IT NL**

(56) Entgegenhaltungen:
**EP-A-0 019 126**
**EP-A-0 019 127**
**EP-A-0 103 230**
**EP-A-0 131 751**
**DE-A-1 286 302**
**FR-A-2 281 403**

(73) Patentinhaber: **BAYER AG**
**D-5090 Leverkusen 1 Bayerwerk (DE)**

(72) Erfinder: **Kress, Hans-Jürgen, Dr.**
**Scheiblerstrasse 111**
**D-4150 Krefeld (DE)**
Erfinder: **Bottenbruch, Ludwig, Dr.**
**Wöhlerstrasse 5**
**D-4150 Krefeld (DE)**
Erfinder: **Witman, Mark, Dr.**
**1856 Taper Drive**
**Pittsburgh Pennsylvania 15 249 (US)**
Erfinder: **Kircher, Klaus, Dr.**
**Alfred-Kubin-Strasse 3**
**D-5090 Leverkusen (DE)**
Erfinder: **Lindner, Christian, Dr.**
**Riehlerstrasse 200**
**D-5000 Köln 60 (DE)**
Erfinder: **Ott, Karl-Heinz, Dr.**
**Paul-Klee-Strasse 54**
**D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 182 226 B1

**Beschreibung**

Gegenstand der vorliegenden Erfindung ist ein Verfahren zur Herstellung von flammwidrigen Polycarbonatformmassen, bestehend aus

a) thermoplastischen, halogenfreien, schwefelfreien und phosphorfreien, aromatischen Polycarbonaten,

b) Alkalisalzen von organischen Bröusted-Säuren mit mindestens einen C-Atom oder von anorganischen Protonensäuren,

c) Tetrafluorethylenpolymerisaten mit mittleren Teilchengrößen von 0,05 µm bis 20 µm, vorzugsweise von 0,08 µm bis 10 µm, und einem Fluorgehalt von 65—76 gew. % und

d) halogenfreien Pfropfpolymerisaten mit einer mittleren Teilchen größe von 0,1—2 µ aus

d)1) 5 bis 90 Gew.-Teilen, vorzugsweise 30 bis 80 Gew.- Teilen einer Mischung aus

d)1)1) 50 bis 95 Gew.-% Styrol, α-Methylstyrol, kernsubstituiertem Styrol, Methylmethacrylat oder Mischungen daraus, und

d)1)2) 50 bis 5 Gew.-% (Meth)Acrylnitril, Methylmethacrylat, Maleinsäureanhydrid, N-substituiertem Maleinimid oder Mischungen daraus, auf

d)2) 95bis 10 Gew.-Teilen, vorzugsweise 70 bis 20 Gew.-Teilen, eines Kutschuks mit einer Glastemperatur $T_G \leqslant 10°C$,

wobei die Komponente

a) in Mengen von 86 bis 99.85 Gew.-%, vorzugsweise von 93,5 bis 99,36 Gew-%, die Komponente

b) in Mengen von 0,02 bis 1 Gew-%, vorzugsweise von 0,04 bis 0,5 Gew.-%, die Komponente

c) in Mengen von 0,05 bis 5 Gew.-%, vorzugsweise von 0,1 bis 1,0 Gew.-%, und die Komponente

d) in Mengen von 0,08 bis 8 Gew.-%, vorzugsweise 0,5 bis 5,0 Gew.-%, vorliegen,

wobei die Summe der Komponenten a) + b) + c) + d) jeweils 100 Gew.-% beträgt, und wobei die Komponenten nach erfolgter Vermischung bei Temperaturen von 260°C bis 320°C in gebräuchlichen Aggregaten schmelzcompoundiert oder schmelzextrudiert werden, das dadurch gekennzeichnet ist, daß man die Komponente c) in Form einer koagulierten Mischung von Emulsionen der Tetrafluorethylenpolymerisate c) mit Emulsionen der Pfropfpolymerisate d) einsetzt, wobei das Mischungsverhältnis von Komponente c) zu Komponente d) zwischen 5:95 und 40:60 liegt.

Den erfindungsgemäß erhältlichen Polycarbonatformmassen können während ihrer Herstellung oder während ihrer Weiterverarbeitung zu thermoplastischen Formkörpern die in der Polycarbonatchemie üblichen anderen Additive, wie Stabilisatoren gegen Hitze, Feuchtigkeit und gegen UV-Strahlen, Entformungsmittel, Farbstoffe, Pigmente und/oder Füllstoffe inden üblichen Mengen zusätzlich augesetzt werden.

Aus der DE—OS 2 918 883 (= EP—A—19 127) sind flammwidrige Polycarbonatlegierungen bekannt, die als weitere Thermoplasten ABS-Polymerisate enthalten, und als Flammschutzmittel neben Alkalisalzen von anorganischen oder organischen Säuren und Polytetrafluorethylenen noch Halogenverbindungen enthalten.

Aus der DE—OS 2 903 100 offenbart allgemein Mischungen unter anderen aus Polycarbonaten und ABS-Polymerisaten, die durch den Zusatz von halogenierten Sulfonaten oder nitrogruppenhaltigen Sulfonaten flammwidrig ausgerüstet sind. Als tropfhemmende Mittel können fluorierte Polyolefine eingesetzt werden. Zusätzlich kann eine organische halogenierte Verbindung mitverwendet werden.

In beiden Literaturstellen ist die Einarbeitung der Tetrafluorethylenpolymerisate in die Polycarbonatformmassen via Koagulation mit dem ABS-Polymerisaten nicht angesprochen.

Bezüglich der schwierigen Verarbeitung von polytetrafluorethylenen sei noch auf FR—PS 1 412 767 verwiesen, bezüglich der Einarbeitung von Polytetrafluorethylenen in Thermoplaste, wie aromatische Polycarbonate oder Polymerisate von ungesättigten Monomeren sei noch auf US-Patent 3 294 871 hingewiesen, sowie auf US-Patent 3 005 795, insbesondere Spalten 3/4, wo Fällung und Koagulation der Thermoplaste erwähnt sind.

Um tetrafluorethylenpolymerisathaltige Polycarbonate, wie sie beispielsweise auch im GP-PS 938 931 beschrieben sind, flammwidrig einzustellen, bedarf est beispielsweise der Einführung von Halogen in das Polycarbonat (siehe DE—PS 2 211 826), gegebenenfalls in Kombination mit Erdalkalicarbonten (US-Patent 3 651 174), oder des Zusatzes von organischen Alkali- oder Erdalkalisalzen (siehe US-Patent 4 391 935 und DE-OS 2 948 439) oder von Antimonoxid (siehe DE—OS 2 400 044) oder des Zusatzes von anorganischen Alkalisalzen (siehe DE—OS 2 800 923) ode des Zusatzes von Alkalisalzen und der Einführung von Halogen in das Polycarbonat (siehe JP—A—49—88 944 und US-Patent 4 208 489. Bei der Verarbeitung solcher Formmassen kommt es insbesondere bei der Herstellung von großflächigen Teilen oder bei hohen Temperaturen zu Oberflächenstörungen wie Schlieren und Streifen.

Demgegenüber führt das erfindungsgemäße Verfahren zu flammwidrigen, Polytetrafluorethylenhaltigen Polycarbonatformmassen, die auch bei Verarbeitungstemperaturen ⩾ 300°C bei gleichbleibend guter Flammwidrigkeit von VO in 1,6 mm Dicke wenige bis keine Oberflächenschlieren zeigen.

Erfindungsgemäß geeignete Polycarbonate gemäß Komponente a) sind solche auf Basis der Diphenole der Formel (I)

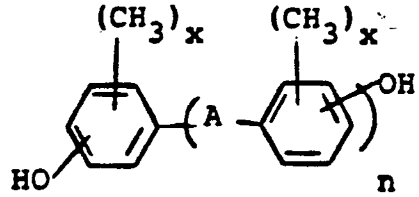

(I),

worin A eine Einfachbindung, ein $C_1$—$C_5$-Alkylen, ein $C_2$—$C_5$-Alkyliden oder ein $C_5$—$C_6$-Cycloalkyliden, X = 0, 1 oder 2 und "n" = 1 oder 0 sind.

Erfdindungsgemäß geeignete Polycarbonate sind sowohl Homopolycarboante als auch Copolycarbonate.

Die Diphenole der Formel (I) sind entweder literaturebekannt oder nach literaturbekannten Verfahren herstellbar.

Die Herstellung der erfindungsgemäß geeigneten Polycarbonate gemäß Komponente a) ist literaturbekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird.

Die erfindungsgemäß geeigneten Polycarbonate gemäß Komponente a) haben mittlere Gewichtsmittelmolekulargewichte ($\overline{M}w$, gemessen beispielsweise durch Ultrazentrifugation oder Streulichtmessung) von 10 000 bis 200 000, vorzugsweise von 20 000 bis 80 000.

Geeignete Dipenole der Formel (I) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-methyl-4-hydroxyphenyl)-propan, 2,2-Bis-(3,5-dimethyl-4-hydroxyphenyl)-propan, Bis-(3,5-dimethyl-4-hydroxyphenyl)-methan und Bis-(4-hydroxyphenyl)-methan.

Bevorzugte Diphenole der Formel (I) sind 2,2-Bis-(4-hydroxyphenyl)-propan und 1,1-Bis-(4-hydroxyphenyl)-cyclohexan.

Die erfindungsgemäß geeigneten Polycarbonate gemäß Komponente a) können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen OH-Gruppen.

Bevorzugte Polycarbonate sind neben dem Bisphenol-A-Homopolycarbonat die Copolycarbonate von Bisphenol-A mit bis zu 15 Mol-%, bezogen auf Molsumme an Diphenolen, an den anderen vorstehend genannten Diphenolen der Formel (I).

Alkalisalze gemäß Komponente b) sind solche von anorganischen Protonensäuren oder organischen Brönsted-Säuren mit mindestens einem Kohlenstoffatom, insbesondere die Li-, Na- oder K-Salze.

Anorganische Protonensäuren im Sinne der Erfindung sind Brönsted-Säuren, die Alkali- oder Erdalkalisalze bilden können (zum Ausdruck "Brönsted-Säuren" vgl. Fieser & Fieser "Organic Chemistry", 1965, S. 595, Interscience Publishers N.Y., USA), wie zum Beispiel Schwefelsäure, Fluorwasserstoffsäure, Salzsäure, Bromwasserstoffsäure, meta-, ortho- oder pyro-Phosphorsäure und Protonensäuren komplexer Fluormetallverbindungen. Als derartige Alkalisalze komplexer Fluormetallverbindungen können z.B. verwendet werden: Hexafluoraluminate, Hexafluortitanate, Hexafluorantimonate, Hexafluorsilikate, Hexafluorwolframate, Hexafluorzirkonate, Hexafluorphosphate und Tetrafluorborate.

Organische Brönsted-Säuren mit mindestens einem C-Atom, vorzugsweise 2 bis 30 C-Atomen, welche Alkalisalze bilden können, können OH- oder NH-acide Verbindungen sein, wie beispielsweise Sulfonsäuren, Phosphonsäuren, Thiophosphonsäuren, NH-acide Sulfonamide oder Sulfonimide.

Geeignete Alkalisalze organischer Brönsted-Säuren sind ebenfalls Salze folgender Substanzklassen:

Phosphorsäureestersalze bzw. Phosphorsäurethioestersalze der allgemeinen Strukturen (II) und (III)

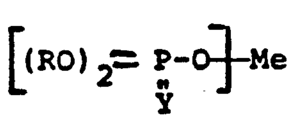

(II) Y = O,S

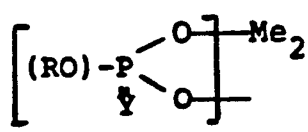

(III) Y = O,S

mit Me = Alkali, vorzugsweise Li, Na oder K und

R = $C_1$—$C_{20}$-Alkyl, Cycloalkyl, $C_2$—$C_{20}$-Alkenyl, Cycloalkenyl, $C_6$—$C_{18}$-Aryl, wobei der Arylrest gegebenenfalls durch 1—4 Halogenatome wie F, Cl oder Br, durch CN—, $CF_3$— oder $C_1$—$C_{18}$-Alkyl oder Cycloalkyl oder $C_2$—$C_{18}$-Alkenyl oder Cycloalkenylgruppen substituiert sein kann.

Geeignete Alkalisalze im Sinne der Erfindung können auch solche der allgemeinen Struktur (IV) sein:

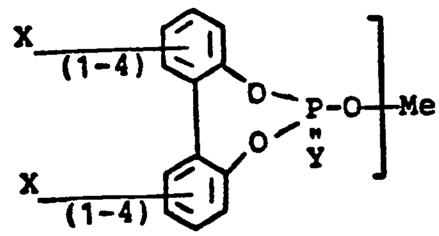

(IV) Y = O, S

mit Me = Alkali und X = F, Cl, Br, CN oder $CF_3$.

Weiterhin können Alkalisalze der allgemeinen Struktur (V) verwendet werden:

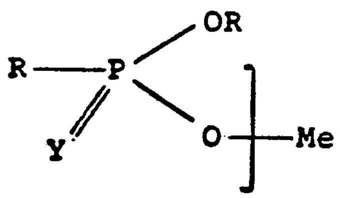

(V) Y = O, S

mit Me = Alkali und R = R der Struktur (II) bzw. (III).

Die Alkalisalze gemäß Komponente b) sollen vorzugsweise einen pH-Wert zwischen 5 und 9, insbesondere zwischen 6,5 und 7,5 haben, gemessen an 1 Gew.-%igen Lösungen oder Suspensionen der Salze in Wasser bei 20°C.

Besonders bevorzugte Alkalisalze gemäß Komponente b) sind solche, die mit Ausnahme von Fluor kein Halogen enthalten.

Erfindungsgemäß geeignete Alkalisalze von organischen Säuren sind beispielsweise Natrium- oder Kaliumperfluorbutansulfonat, Natrium- oder Kaliumperfluormethansulfonat, Natrium- oder Kalium-2,5-dichlorbenzolsulfonat, Natrium- oder Kalium-2,4,5-trichlorbenzolsulfonat, Natrium oder Kalium(4-chlorphenyl)-phosphonat, Natrium- oder Kaliummethylphosphonat, Natrium- oder Kalium-(2-phenylethyl)-phosphonat, Natrium- oder Kalium-pentachlorbenzoat, Natrium- oder Kalim-2,4,6-trichlorbenzoat, Natrium- oder Kalium-2,4-dichlorbenzoat und Lithiumphenylphosphonat.

Erfindungsgemäß geeignete Alkalisalze von anorganischen Säuren sind beispielsweise Trinatrium- oder Trikaliumhexafluoroaluminat, Dinatrium- oder Dikalium-hexafluorotitanat, Dinatrium- oder Dikaliumhexafluorosilikat, Dinatrium- oder Dikalium-hexafluorozirkonat, Natrium- oder Kalium-pyrophosphat, Natrium- oder Kalium-metaphosphat, Natrium- oder Kalium-tetrafluoroborat, Natrium- oder Kaliumhexafluorophosphat und Natrium- oder Kalium- oder Lithiumphosphat.

Ebenfalls sind Mischungen der Salze untereinander geeignet.

Besonders geeignete Alkalisalze sind die Natrium- und Kalium-perfluoralkansulfonate, die Kalium- und die Natrim-hexafluoroaluminate, -hexafluorotitanate, -hexafluorosilikate und -tetrafluorborate, Kalium-pyrophosphat, Kalium-methylphosphonat und Lithium-phenylphosphonat.

Zur Herstellung der halogenfreien Pfropfpolymerisate gemäß Komponente d) geeignete Kautschuke sind insbesondere Polybutadien, Butadien/Styrol-Copolymerisate mit bis zu 30 Gew.-%, bezogen auf Kautschukgewicht, eines niederen Alkylesters von Acryl- oder Methacrylsäure (beispielsweise Methylmethacrylat, Ethylacrylat, Methylacrylat oder Ethylmethacrylat). Weitere geeignete Kautschuke sind beispielsweise Polyisopren oder Alkylacrylatkautschuke auf der Basis von $C_1$—$C_8$-Alkylacrylaten, insbesondere Ethyl-, Butyl-, Ethyl-hexylacrylat. Diese Alkylacrylatkautschuke können gegebenenfalls bis zu 30 Gew.-%, bezogen auf Kautschukgewicht, Monomere wie Vinylacetat, Acrylnitril, Styrol, Methylmethacrylat und/oder Vinylether copolymerisiert enthalten. Diese Alkylacrylatkautschuke können weiterhin kleinere Menge, vorzugsweise bis zu 5 Gew.-% bezogen auf Kautschukgewicht, vernetzend wirkender ethylenisch ungesättigter Monomere enthalten. solche Vernetzer sind z.B. Alkylendioldi(meth)-acrylate, Polyesterdi-(meth)-acrylat, Divinylbenzol, Tri-Vinylbenzol, Triallylcyanurat, Allyl-(meth)-acrylat, Butadien oder Isopren. Solche Alkylacrylate sind bekannt. Acrylatkautschuke als Pfropfgrundlage können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten. Andere geeignete Kautschuke sind z.B. EPDM-Kautschuke, also Kautschuke aus Ethylen, Propylen und einem unkonjugierten Dienmonomer.

Bevorzugte Kautschuke zur Herstellung der Pfropfpolymerisate (d) sind Dienmonomer- und Alkylacrylatkautschuke.

Die Kautschuke liegen in den Pfropfpolymerisaten d) in Form wenigstens partiell vernetzter Teilchen einer mittleren Teilchengröße von 0,1 bis 2 µm, insbesondere 0,2 bis 0,6 µm vor. Die Pfropfpolymerisate d) werden durch radikalische Pfropfcopolymerisation der eingangs definierten Monomerengemische aus

d)1)1) und d)1)2) in Gegenwart der zu pfropfenden Kautschuke d)2) hergestellt und sind durchweg bekannt. Bevorzugte Herstellungsverfahren für die Pfropfpolymerisate d) sind Emulsions-, Lösungs-, Masse- oder Suspensionspolymerisation. Besonders bevorzugte Pfropfpolymerisate d) sind die sogenannten ABS-Polymerisate. Als kernsubstituierte Styrole seien 2,4-Dimethylstyrol und p-Methylstyrol erwähnt.

Da der Einsatz der erfindungsgemäß zu verwendenden Pfropfpolymerisate d) durch Vorabmischung ihrer Emulsionnen mit Emulsionen der Komponente c) erfolgte, ist die Herstellung der Komponente d) nach dem Verfahren der Emulsionspolymerisation am zweckmäßigsten.

Die erfindungsgemäß einzusetzenden Pfropfpolymerisate gemäß Komponente d) werden in Form wäßriger Emulsionen mit Teilchengrößen von 0,1 bis 2 µm, insbesondere 0,2 bis 0,6 µm eingesetzt. Derartige Emulsionen sind bekannt oder sind in bekannter Weise aus den vorstehend beschreibenen Pfropfpolymerisaten d) herstellbar oder fallen unmittelbar bei der Herstellung der Pfropfpolymerisate an.

Die erfindungsgemäß geeigneten Tetrafluorethylenpolymerisate gemäß Komponente c) sind Polymere mit Fluorgehalten von 65 bis 76 Gew.-%, vorzugsweise 70 bis 76 Gew.-%. Beispiele sind Polytetrafluorethylen, Tetrafluorethylenen- Hexafluorpropylen-Copolymere oder Tetrafluorethylencopolymerisate mit geringen Mengen fluorfreier copolymerisierbarer ethylenisch ungesättigter Monomerer. Die Polymerisate sind bekannt. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidsulfat bei Drucken von 7 bis 71 kg/cm$^2$ und bei Temperaturen von 0 bis 200°C, vorzugsweise bei Temperaturen von 20 bis 100°C. (Nähere Einzelheiten siehe beispielsweise US-Patent 2 393 967).

Zur Herstellung einer entsprechenden Mischung aus den Komponenten c) und d) wird zuerst eine wäßrige Emulsion (Latex) eines Pfropfpolymerisates d) mit mittleren Latexteilchengrößen von 0,1 bis 2 µm, insbesondere 0,2 bis 0,6 µm, mit einer feinteiligen Emulsion eines Tetrafluorethylenpolymerisates (c) in Wasser mit mittleren Teilchengrößen von 0,05—20 µm, insbesondere von 0,08—10 µm vermischt; geeignete Tetrafluorethylenpolymerist-Emulsionen besitzen ünlicherweise Feststoffbehalte von 30—70 Gew.-%, insbesondere von 50—60.-%.

In der Emulsionsmischung liegt das Gewichtsverhältnis Pfropfpolymerisat d) zum Tetrafluorethylenpolymerisat c) zwischen 95:5 und 60:40. Anschließend wird die Emulsionsmischung in bekannter Weise koaguliert, beispielsweise durch Sprühtrocknung, Gefriertrocknung oder Koagulation mittels Zusatz von anorganischen oder organischen Salzen, Säuren, Basen oder organischen, mit Wasser mischbaren Lösungsmitteln, wie Alkoholen, Ketonen, vorzugsweise bei Temperaturen von 20—150°C, insbesondere von 50—100°C. Falls erforderlich, kann bei 50—200°C, bevorzugt 70—100°C getrocknet werden.

Geeignete Tetrafluorethylenpolymerisat-Emulsionen sind handelsübliche produkte und werden beispielsweise von der Firma DuPont als Teflon® 30 N angeboten. Teilchengröße bedeutet in vorliegender Anmeldung immer mittlerer Teilchendurchmesser $d_{50}$, ermittelt durch Ultrazentrifugenmessungen nach W. Scholtan et. al., Kolloid-Z u. Z. Polymere 250, (1972) 782—796.

Die Vermischung der einzelnen Bestandteile a) und b] mit den Mischungen den Komponenten c)/d) und gegebenenfalls mit weiteren Additiven kann in bekannter Weise sowohl sukzessive als auch simultan erfolgen, und zwar sowohl bei etwa 20°C (Raumtemperatur) als auch bei höherer Temperatur.

Die Schmelzextrusion bzw. Schmelzcompoundierung kann beispielsweise in bekannten Doppelwellenextrudern oder Innenknetern durchgeführt werden.

Die erfindungsgemäß erhältlichen Formmassen können zu Formkörpern jeder Art, also auch zu Folien in bekannter Weise verarbeitet werden. Die Verarbeitung zu Formkörpern erfolgt beispielsweise nach bekannten Spritzgießverfahren bei Temperaturen zwischen 270°C und 350°C.

Die erfindungsgemäßen Formmassen können in Bereichen, für die eine hohe Flammwidrigkeit oder gute Gleiteigenschaften gefordert werden, eingesetzt werden, z.B. im Elektrobereich für Schalterblenden, Steckdosen, Steckerleisten, Schaltkästen, Telefongehäuse, usw., im Haushaltsektor für Gehäuseteile von Bugeleisen, Kaffeemaschinen und insbesondere im Großgerätebreich z.B. für Computergehäuseteile.

Beispiel 1 (Vergleichsbeispiel)

9,443 kg eines Bisphenol-A-Homopolycarbonat mit einer relativen Lösungsviskosität nach Fomentwurf DIN 51 562 Teil 3 von 1,295 und einem Gehalt von 0,45 Gew.-%, bezogen auf Polycarbonat und Ester, eines langkettigen Esters aus langkettiger Carbonsäure und langkettigem Alkohol wurde mit 100 g $TiO_2$, 37 g (0,39 Gew.-%) Kryolith und 20 g (0,21 Gew.-%) fibrillenbildendem ASTM TYP 3 Tetrafluorethylenpolymerisat, bezogen jeweils auf Gesamtgewicht, vermischt und bei 270°C Massetemperatur auf einen 2-Wellenextruder unter üblichen Bedingungen compoundiert. Die erhaltene granulatförmige Formmasse wurde nach 4 Stunden Trocknung bei 120°C im Umlufttrockenschrank auf einer Spritzgußmaschine bei 300°C Massetemperatur zu kastenförmigen Formteilen verspritzt. Die Formteil zeigten über das ganze Formteil, insbesondere in Angußnähe, länglich Streifen. Die gleiche Formmasse wurde zu Prüfkörpern der Abmessungen 127 × 12,7 × 3,2 bzw. 127 × 12, 7 × 1,6 mm abgespritzt und gemäß Test UL 94-V der Underwriter's Laboratories, Inc. getestet. In beiden Wandstärken wurde die Klassifizierung V-0 erreicht.

Beispiel 2

Polytetrafluorethylen/Pfropfpolymerisat-Gemische im Gewichtsverhältnis 90:10 (Beispiel 2a) und 72:28 (Beispiel 2b).

2.1 Verwendetes Pfropfpolymerisat:

SAN-Pfropfpolymerisat von 50% Styrol/Acrylnitril-Gemisch (im Gew.-Verhältnis von 78:28) auf 50% teilchenförmiges Polybutadien einer mittleren Teilchengröße ($d_{50}$) von 0,4 µm, erhalten durch Emulsionspolymerisation.

2.2 Verwendetes Tetrafluorethylenpolymerisat

Es wurde eine Tetrafluorethylenpolymerisatemulsion mit einer mittleren Teilchengröße von 0,05—0,5 µm und einem Feststoffgehalt von 60 verwendet.

2a/2b Herstellung der Tetrafluorethylenpolymerisat/Pfropfpolymerisat-Mischung

Die Emulsion des Tetrafluorethylenpolymerisats (2.2) wurde mit der Emulsion des SAN-Pfropfpolymerisats (2.1) vermischt und mit 1,8 Gew.-%, bezogen auf Polymerfeststoff, phenolischer Antioxidantien stabilisiert. Bei 85—95°C wird die Mischung mit einer wäßrigen Lösung von $MgSO_4$ (Bittersalz) und Essigsäure bei pH 4—5 koaguliert, filtriert und bis zur praktischen Elektrolytfreiheit gewaschen, anschließend durch Zentrifugation von der Hauptmenge Wasser befreit und danach bei 100°C zu einem Pulver getrocknet.

Das Verhältnis Tetrafluorethylenpolymerisatemulsion zu SAN-Pfropfpolymerisat-Emulsion so gewählt, daß das resultierende Gemisch zum einen einen Gehalt von 10 Gew.-% (Beispiel 2a) zum zweiten einen Gehalt von 28 Gew.-% Tetrafluorethylenpolymerisat (Beispiel 2b) besitzt.

Beispiel 3

Es wurde eine Formmasse, wie in Beispiel 1 erläutert hergestellt, jedoch unter Verwendung von 200 g einer Tetrafluorethylenpolymerisat-Emulsion/Pfropfpolymerisat-Emulsions-Cofällung, Gewichtsverhältnis 90:10, gemäß Beispiel 2a; der Gehalt an Tetrafluorethylenpolymerisat in der Formmasse beträgt 0,2 Gew.-%, bezogen auf Gesamtgewicht.

Untergleichen Bedingungen abgespritzt zeigten kastenförmige Spritzlinge bei Spritztemperaturen von 300°C praktisch keine silbrigen Oberflächenstreifen; auch bei einer Abspritztemperatur von 330°C (Massetemperatur) traten nur sehr wenige silbrige Oberflächenstreifen auf, die nicht störend wirkten. Übliche Abspritztemperaturen bewegen sich um 300°C, eine Abspritztemperatur von 330°C ist bereits ungewöhnlich hoch, so daß ein 330°C Test die evtl. Mängel besonders deutlich erkenntlich macht.

Eine Brandprüfung gemäß UL Subj. 94-V zeigt sowohl in 1,6 mm als auch in 3,2 mm Dicke V-0.

Beispiel 4

Es wurde eine Formmasse, wie in Beispiel 1 erläutert, hergestellt, jedoch unter Verwendung von 71,5 g einer Polytetrafluorethylenpolymerisat-Emulsion/Pfropfpolymerisat-Emulsions-Cofällung, Gewichtsverhältnis 72:28 gemäß Beispiel 2b; der Gehalt an Tetrafluorethylenpolymerisat in der Formmasse beträgt 0,2 Gew.-% bezogen auf Gesamtgewicht.

Kastenförmige Formteile, die aus dieser Formmasse gefertigt wurden, zeigten wie in Beispiel 3 nehuzu keine Oberflächendefekte, Testkörper, die einer UL Subj. 94-V-Prüfung in 1,6 mm und 3,2 mm (Brandprüfung) unterworfen wurden, zeigten die Brandklassifizierung V-0.

**Patentansprüche**

1. Verfahren zur Herstellung von flammwidrigen Polycarbonatformmassen, bestehend aus

a) thermoplastischen, halogenfreien, schwefelfreien und phosphorfreien Polycarbonaten,

b) Alkalisalzen von organischen Bröusted-Säuren mit mindestens einem C-Atom oder von anorganischen Protonensäuren,

c) Tetrafluorethylenpolymerisaten mit mittleren Teilchengrößen von 0,05 µm bis 20 µm und einem Fluorgehalt von 65—76 gew. % und

d) halogenfreien Pfropfpolymerisaten mit einer mittleren Teilchengröße von 0,1—2 µ aus

d)1) 5 bis 90 Gew.-Teilen einer Mischung aus

d)1)1) 50 bis 95 Gew.-% Styrol, α-Methylstyrol, kernsubstituiertem Styrol, Methylmethacrylat oder Mischungen daraus, und

d)1)2) 50 bis 5 Gew.-% (Meth)Acrylnitril, Methylmethacrylat, Maleinsäureanhydrid, N-substituiertem Maleinimid oder Mischungen daraus, auf

d)2) 95 bis 10 Gew.-Teilen, vorzugsweise 70 bis 20 Gew.-Teilen, eines Kutschuks mit einer Glastemperatur $T_G \leq 10$°C,

wobei die Komponente

a) in Mengen von 86 bis 99.85 Gew.-%, die Komponente

b) in Mengen von 0,02 bis 1 Gew-%, die Komponente

c) in Mengen von 0,05 bis 5 Gew.-%, und die Komponente

d) in Mengen von 0,08 bis 8 Gew.-%, vorliegen,

wobei die Summe der Komponenten a) + b) + c) + d) jeweils 100 Gew.-% beträgt, und wobei die Komponenten nach erfolgter Vermischung bei Temperaturen von 260°C bis 320°C in gebräuchlichen Aggregaten schmelzcompoundiert oder schmelzextrudiert werden, das dadurch gekennzeichnet ist, daß

man die Komponente c) in Form einer koagulierten Mischung von Emulsionen der Tetrafluorethylenpolymerisate c) mit Emulsionen der Pfropfpolymerisate d) einsetzt, wobei das Mischungsverhältnis von Komponente c) zu Komponente d) jeweils zwischen 5:95 und 40:60 liegt.

2. Verfahren gemäß Anspruch 1, dadurch gekennzeichnet, daß die Komponente
a) in Mengen von 93,5 bis 99,36 Gew.-%, die Komponente
b) in Mengen von 0,04 bis 0,5 Gew.-%, die Komponente
c) in Mengen von 0,1 bis 1,0 Gew.-% und die Komponente
d) in Mengen von 0,5 bis Gew.-% vorliegen.

3. Verfahren gemäß Ansprüche 1 und 2, dadurch gekennzeichnet, daß man zusätzlich mindestends einen Zusatz ausgewählt aus der Gruppe der Stabilisatoren, Entformungsmittel, Farbstoffe, Pigmente und Füllstoffe einarbeitet.

**Revendications**

1. Procédé de préparation de matières à mouler ignifuges à base de polycarbonates, consistant en
a) des polycarbonates thermoplastiques excempts d'halogènes, exempts de soufre et exempts de phosphore,
b) des sels alcalins d'acides organiques de Brönsted contenant au moins un atome de carbone ou d'acides protoniques minéraux,
c) des polymères du tétrafluoréthylène à des dimensions de particules moyennes de 0,05 à 20 µm et à une teneur en fluor de 65 à 76% en poids et
d) des polymères greffés exempts d'halogènes, à une dimension de particule moyenne de 0,1 à 2 µm, de
d)1) 5 à 90 parties en poids d'un mélange de
d)1)1) 50 à 95% en poids de styrène, d'alpha-méthylstyrène, d'un styrène substitué dans le noyau, de méthacrylate de méthyle ou de mélanges de ces monomères, et
d)1)2) 50 à 5% en poids de (méth)acrylonitrile, de méthacrylate de méthyle, d'anhydride maléique, d'un maléimide substitué à l'azote ou de mélanges de ces monomères, sur
d)2) 95 à 10 parties en poids, de préférence 70 à 20 parties en poids, d'un caoutchouc présentant une température de transition vitreuse $T_G$ inférieure ou égale à 10°C,
sous réserve que
le composant a) est présent en quantité de 86 à 99,85% en poids,
le composant b) est présent en quantité de 0,02 à 1% en poids,
le composant c) est présent en quantité de 0,05 à 5% en poids et
le composant d) est présent en quantité de 0,08 à 8% en poids,
le somme des composant a) + c) + d) étant dans tous les cas égale à 100% en poids, et dans lequel les composants, après mélange, sont soumis à mélange à l'état fondu ou extrusion à l'état fondu à des températures de 260 à 320°C dans des appareillages usuels, caractérisé en ce que l'on met en oeuvre le composant c) à l'état d'un mélange coagulé d'émulsions des polymères du tétrafluorétyhylène c) avec les émulsions des polymères greffés d), les proportions relatives de mélange entre le composant c) et le composant d) se situant dans tous les cas entre 5:95 et 40:60.

2. Procédé selon la revendication 1, caractérisé en ce que le composant a) est présent en quantité de 93,5 à 99,36% en poids,
le composant b) est présent en quantité de 0,04 à 0,5% en poids,
le composant c) est présent en quantité de 0,1 à 1,0% en poids et
le composant d) est présent en quantité de 0,5 à 5% en poids.

3. Procédé selon les revendications 1 et 2, caractérisé en ce que l'on incorpore en outre au moins un additif choisi dans le groupe formé par les stabilisants, les agents de démoulage, les colorants, les pigments et les matières de charge.

**Claims**

1. A process for the production of flame-resistant polycarbonate molding compounds consisting of
a) thermoplastic, halogen-free, sulfur-free and phosphorus-free polycarbonates,
b) alkali salts of organic Brönsted acids containing at least one C atom or of inorganic protonic acids,
c) tetrafluoroethylene polymers having average particle sizes of 0.05 to 20 µm and a fluorine content of 65 to 76% by weight and
d) halogen-free graft polymers having a particle size of 91—2 µ of
d)1) 50 to 95% by weight styrene, α-methylstyrene, nucleus-substituted styrene, methyl methacrylate or mixtures thereof and
d)1)2) 50 to 5% by weight (meth)acrylonitrile, methyl methacrylate, maleic anhydride, N-substituted maleic imide or mixtures thereof on
d)2) 95 to 10 parts by weight and preferably 70 to 20 parts by weight of a rubber having a glass temperature $T_G$ of $\leq$ 10°C,

the components being present in the following quantities:

a) 86 to 99.85% by weight,
b) 0.02 to 1% by weight,
c) 0.05 to 5% by weight,
d) 0.08 to 8% by weight,

the sum of components a) + b) + c) + d) being 100% by weight and the components, after mixing, being melt-compounded or melt-extruded in standard units at temperatures of 260 to 320°C, characterized in that component c) is used in the form of a coagulated mixture of emulsions of the tetrafluoroethylene polymers c) with emulsions of the graft polymers d), the mixing ratio of component c) to component d) being from 5:95 to 40:60.

2. A process as claimed in claim 1, characterized in that the components are present in the following quantities:

a) 93.5 to 99.36% by weight,
b) 0.04 to 0.5% by weight,
c) 0.1 to 1.0% by weight,
d) 0.5 to 5% by weight.

3. A process as claimed in claims 1 and 2, characterized in that at least one additive from the group consisting of stabilizers, mold release agents, dyes, pigments and fillers is additionally incorporated.